# FASCICULE DE BREVET EUROPEEN

(11) **EP 1 375 955 B1**
(45) Date de publication et mention de la délivrance du brevet: **28.03.2007**
(21) Numéro de dépôt: 03291297.4
(22) Date de dépôt: 30.05.2003
(51) Int. Cl.: F16F 1/12

(54) **Gaine pour ressort de suspension**
Hülle für eine Aufhängungsfeder
Sleeving for suspension spring

(30) Priorité: 13.06.2002 FR 0207292
(43) Date de publication de la demande: 02.01.2004
(73) Titulaire: ALLEVARD REJNA AUTOSUSPENSIONS, 92210 Saint-Cloud (FR)
(72) Inventeur: Duval, Philippe, 59552 Lambres Lez Douai (FR); Henri, Roger, 52300 Joinville (FR)
(74) Mandataire: Barbin le Bourhis, Joël

(56) Documents cités:
- EP-A- 0 791 491
- FR-A- 1 308 763
- FR-A- 2 656 052
- US-A- 5 299 786

## Description

La présente invention concerne un système de suspension à ressort, comprenant un ressort hélicoïdal, une gaine et au moins une coupelle d'appui et de centrage, ledit ressort comportant une spire d'extrémité dont au moins une partie est recouverte par ladite gaine et qui est centrée et en appui sur ladite coupelle d'appui et de centrage.

L'invention s'applique en particulier au domaine des véhicules automobiles.

La présence d'une gaine entourant au moins une partie de la dernière spire du ressort (spire d'extrémité), permet d'éviter le contact direct de cette dernière sur la coupelle. En conséquence, le bruit provenant du frottement de la spire d'extrémité sur la coupelle est atténué et les vibrations qui peuvent être transmises au restant du véhicule sont amorties. En outre, la gaine permet de protéger la spire d'extrémité du ressort, en particulier contre la corrosion qui peut apparaître au voisinage du contact entre la spire d'extrémité et la coupelle par accumulation d'eau et/ou de débris.

On connaît des systèmes de suspension à ressort de ce type, comportant une gaine tubulaire enrobant toute la section d'une partie au moins de la spire d'extrémité. Cependant, de telles gaines favorisent la condensation de l'eau qui peut pénétrer à l'intérieur du tube de la gaine et qui provoque généralement la corrosion de la spire. En outre, le montage d'une telle gaine est long puisqu'il nécessite un enfilage par une des extrémités.

On connaît d'autres systèmes de suspension à ressort de ce type, comportant une gaine qui présente une ouverture qui permet à la fois de coiffer facilement la gaine sur la spire et d'éviter la condensation de l'eau tout autour de la section de la spire. Cependant, de l'eau et/ou des débris peuvent s'accumuler dans le fond de la gaine, en particulier dans le cas de la coupelle inférieure où l'ouverture est tournée vers le haut du système de suspension, entraînant la corrosion de la spire.

Pour favoriser l'évacuation de l'eau et des débris, on connaît des gaines dont l'ouverture est tournée vers l'extérieur du ressort. Cependant, la spire se trouve exposée à la projection de gravillons qui peuvent endommager le revêtement de la spire destiné à protéger cette dernière. En outre, le montage et le maintien en position de telles gaines sont délicats, puisque l'ouverture tournée vers l'extérieur est contraire à la courbure du ressort.

Le document FR-A-1 308 763 décrit un système de suspension à ressort, comprenant un ressort hélicoïdal, une gaine et au moins une coupelle d'appui et de centrage, ledit ressort comportant une spire d'extrémité dont au moins une partie est recouverte par ladite gaine et qui est centrée et en appui sur ladite coupelle d'appui et de centrage, ladite partie de la spire d'extrémité recouverte par la gaine étant centrée et en appui sur la coupelle d'appui et de centrage par l'intermédiaire de moyens d'entretoisement entre ladite gaine et ladite coupelle d'appui et de centrage.

Le but de l'invention est de fournir un système de suspension à ressort dont la gaine est facile à monter et qui permet d'évacuer naturellement l'eau et les débris.

Ce but est atteint par le fait que ladite gaine présente une ouverture s'étendant sur la périphérie interne de la gaine qui est tournée vers l'axe du ressort.

L'ouverture de la gaine tournée vers l'intérieur de la spire d'extrémité facilite la mise en place de la gaine sur la spire qui en outre n'a pas tendance à s'en désolidariser.

Pour éviter tout risque d'accumulation de l'eau et/ou des débris entre la spire d'extrémité et la coupelle d'appui et de centrage, le dispositif présente des moyens d'entretoisement situés préférentiellement localement entre la gaine et la coupelle d'appui et de centrage. En effet, ces moyens d'entretoisement, réalisés sous la forme d'éléments discrets, permettent d'écarter la gaine enrobant la spire d'extrémité de la coupelle d'appui et de centrage, de sorte que l'eau et les débris ne peuvent pas rester accumuler entre les deux, mais sont naturellement évacués, généralement vers le bas.

En outre, la présence de ces moyens d'entretoisement permet de localiser précisément des contacts ponctuels entre la gaine et la coupelle d'appui et de centrage.

Ainsi, les ressorts peuvent être standardisés, tandis que seuls les moyens d'entretoisement sont modifiés.

Les moyens d'entretoisement peuvent être rapportés sur la coupelle et/ou la gaine, par exemple, par surmoulage ou bien, les moyens d'entretoisement et la gaine peuvent faire partie d'une même pièce de gainage et d'entretoisement.

En conséquence, seule cette pièce de gainage et d'entretoisement nécessite d'être adaptée à la fonction recherchée (appuis localisés, décentrage, directions de droite ou de gauche, etc.), tandis que le restant du dispositif, en particulier le ressort et la coupelle d'appui et de centrage sont standards.

Avantageusement, lesdits moyens d'entretoisement comportent des moyens d'entretoisement radial aptes à maintenir la gaine à distance d'une face de centrage de la coupelle d'appui et de centrage.

En conséquence, il est simple d'adapter le dispositif de suspension, en particulier un décentrage du ressort s'effectue très facilement, sans avoir à changer tout le dispositif.

Avantageusement, les moyens d'entretoisement radial comportent des pattes de centrage s'étendant entre la gaine et la face de centrage de la coupelle d'appui et de centrage.

En effet, il suffit de modifier la forme des moyens d'entretoisement radial pour changer le centrage de la gaine, donc du ressort, par rapport à la coupelle d'appui et de centrage. Lorsque les moyens d'entretoisement radial sont formés sur la gaine, un même ressort peut être plus ou moins décentré selon le type de gaine qui enrobe sa spire d'extrémité.

Avantageusement, les moyens d'entretoisement comportent des moyens d'entretoisement axial aptes à maintenir la gaine à distance d'une face d'appui de la coupelle d'appui et de centrage.

Le contact entre le ressort et la coupelle d'appui et de centrage n'est plus continu, mais ponctuel au voisinage de chacun des moyens d'entretoisement axial, ce qui permet de diminuer le bruit dû au frottement du ressort sur la coupelle et d'éviter tout phénomène de claquement.

Avantageusement, les moyens d'entretoisement axial comportent des pattes d'appui s'étendant entre la gaine et la face d'appui de la coupelle d'appui et de centrage.

En conséquence, la gaine est surélevée ou surbaissée par rapport à la face d'appui de la coupelle d'appui et de centrage inférieure ou supérieure, de sorte que l'eau et les débris s'évacuent d'autant plus facilement. En outre, les pattes d'appui peuvent être localisées différemment d'un système de suspension à l'autre pour lui conférer des propriétés différentes (suspension à droite ou à gauche sur le véhicule, etc.).

On comprend que les moyens d'entretoisement peuvent comprendre des moyens d'entretoisement radial et des moyens d'entretoisement axial. En outre, une patte de centrage et une patte d'appui peuvent ou non être superposées l'une au-dessus de l'autre dans la direction axiale du ressort pour former ou non une paire de pattes d'appui et de centrage.

L'invention sera bien comprise et ses avantages apparaîtront mieux à la lecture de la description détaillée qui suit, de modes de réalisation représentés à titre d'exemples non limitatifs.

La description se réfère aux dessins annexés sur lesquels:
- la figure 1 est une vue en perspective d'une gaine selon l'invention,
- la figure 2 est une vue en section selon les flèches II-II de la gaine de la figure 1 disposée sur une coupelle d'appui et de centrage,
- la figure 3 est une vue partielle selon la direction III de la figure 2,
- la figure 4A est une vue en section selon les flèches IVA-IVA de la figure 3 selon une variante de la gaine disposée sur une coupelle d'appui et de centrage,
- la figure 4B est une vue en section selon les flèches IVB-IVB de la figure 3 montrant une variante des moyens d'entretoisement,
- la figure 4C est une vue en section selon les flèches IVC-IVC de la figure 3 montrant une autre variante des moyens d'entretoisement, et
- la figure 5 est une vue en section partielle d'une gaine selon une variante, disposée sur une coupelle d'appui et de centrage.

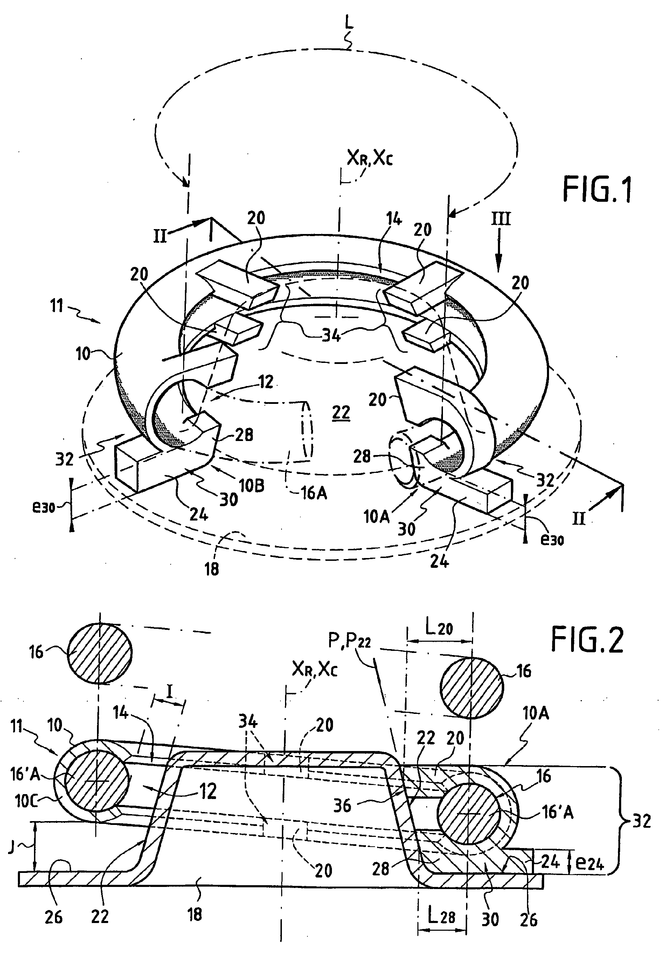

La figure 1 montre une gaine 10 destinée à recouvrir au moins une partie d'une spire d'extrémité d'un ressort (représentée en traits mixtes sur la figure 1) qui présente une ouverture 12 s'étendant sur la périphérie interne 14 de la gaine 10.

Cette ouverture 12 est préférentiellement sensiblement longitudinale et est formée sur toute la longueur L de ladite gaine 10. Lorsque la gaine 10 est disposée sur la spire d'extrémité, elle prend une forme sensiblement hélicoïdale.

En conséquence, la gaine 10 se monte très facilement sur un ressort hélicoïdal 16 d'un système de suspension à ressort en veillant à tourner l'ouverture 12 vers l'axe X_{R} du ressort, comme illustré sur la figure 2. En fait, il suffit de venir enclipser la gaine 10 sur le ressort 16 au voisinage de la partie de spire d'extrémité 16'A destinée à être recouverte, pour que cette première vienne se positionner et reste en place. L'ouverture 12 étant tournée vers l'axe X_{R} du ressort, la gaine 10 a une tendance naturelle à rester disposée sur le ressort 16 en entourant la spire d'extrémité 16A.

Des moyens d'entretoisement préférentiellement formés directement sur la gaine 10 pour constituer une seule pièce de gainage et d'entretoisement 11, par exemple par moulage ou injection de matière plastique, élastomère, etc. , permettent à la partie de la spire d'extrémité 16'A recouverte par la gaine 10, d'être centrée et en appui sur une coupelle d'appui et de centrage 18 (voir figure 2).

En l'espèce, les moyens d'entretoisement comportent d'une part, des moyens d'entretoisement radial 20 aptes à maintenir la gaine 10 à distance d'une face de centrage 22 de la coupelle d'appui et de centrage 18, et, d'autre part, des moyens d'entretoisement axial 24 aptes à maintenir la gaine 10 à distance d'une face d'appui 26 de la coupelle d'appui et de centrage 18.

Les moyens d'entretoisement radial 20, en l'espèce des pattes de centrage, s'étendent entre la gaine 10 et la face de centrage 22 de la coupelle d'appui et de centrage 18. Ces pattes de centrage 20 sont avantageusement formées directement sur la gaine 10 et sont tournées vers l'axe X_{R} du ressort 16 de manière à venir en appui sur la face de centrage 22, dont l'axe de symétrie X_{C} est confondu avec cet axe X_{R}, de sorte que le centrage s'effectue radialement autour de l'axe X_{R} du ressort 16 (ou de l'axe X_{C} de la coupelle d'appui et de centrage 18).

Les moyens d'entretoisement axial 24, en l'espèce des pattes d'appui, s'étendent entre la gaine 10 et la face d'appui 26 de la coupelle d'appui et de centrage 18. Selon le système de suspension recherché, ces pattes d'appui 24 peuvent être plus ou moins réparties sur la périphérie interne 14 de la gaine 10. En position sur le système de suspension, ces appuis s'effectuent sensiblement parallèlement à l'axe X_{R} du ressort 16.

Ces pattes d'appui 24 peuvent présenter, comme illustré sur la figure 1, au voisinage d'une extrémité 10A de la gaine 10, une extension transversale 28 apte à coopérer avec la face de centrage 22 pour former ainsi une patte d'appui et de centrage 30. En fait, cette extension transversale 28 est analogue à une patte de centrage 20, de sorte que cette patte d'appui et de centrage 30 permet à la fois de maintenir la gaine 10 à distance de la face de centrage 22 et de la face d'appui 26.

Au moins une des pattes de centrage 20 et une des pattes d'appui 24 sont préférentiellement superposées dans une direction axiale du ressort 16 pour former une paire de pattes de centrage et d'appui 32 qui s'étendent chacune de part et d'autre de l'ouverture 12. Dans le cas où la coupelle d'appui et de centrage 18 est la coupelle inférieure, comme illustré sur la figure 2, la patte de centrage 20 est disposée au-dessus de la patte d'appui 24. La disposition inverse est adoptée dans le cas d'une coupelle de centrage et d'appui supérieure.

Pour toute la suite, on considère que la coupelle décrite est une coupelle inférieure et les termes « dessous » et « inférieur » se rapportent à une zone la plus proche de la face d'appui de la coupelle de centrage et d'appui. Il s'ensuit que les éléments décrits sont les mêmes dans le cas d'une coupelle d'appui et de centrage supérieure, avec la disposition inverse précitée.

En l'espèce, la gaine représentée sur la figure 1 comporte deux paires de pattes d'appui et de centrage 32 qui s'étendent de part et d'autre de l'ouverture 12, respectivement à chaque extrémité 10A et 10B de la gaine 10.

Par ailleurs, au moins une des pattes de centrage 20 est disposée au-dessus d'une autre patte de centrage 20 dans une direction axiale du ressort 16 pour former une paire de pattes de centrage 34 qui s'étendent chacune de part et d'autre de l'ouverture 12.

Pour assurer un bon appui et un bon centrage du ressort 16 sur la coupelle d'appui et de centrage 18, la largeur de chacune des pattes de centrage 20 et des pattes d'appui 24 présente une largeur curviligne comprise entre 4 mm et 40 mm, préférentiellement comprise entre 8 mm et 15 mm.

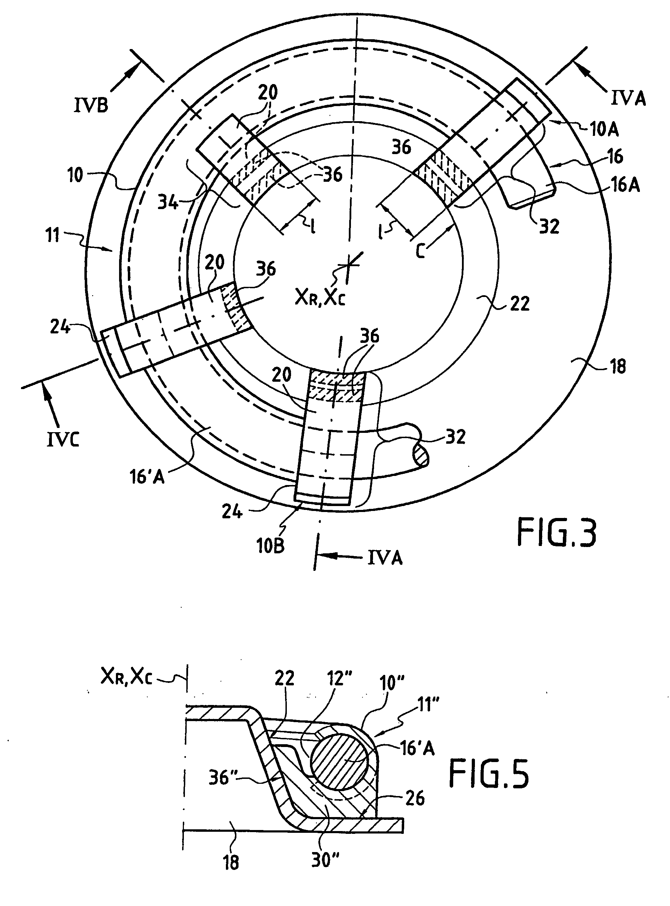

La forme des pattes de centrage 20 et de celle des pattes d'appui et de centrage 30 sont préférentiellement adaptées au contour de la face de centrage 22 sur laquelle elles viennent en appui. Ainsi, comme représenté sur la figure 3, les pattes de centrage 20 et les pattes d'appui et de centrage 30 peuvent présenter une courbure C analogue à la courbure de la face de centrage 22.

En outre, lorsque la face de centrage 22 de la coupelle d'appui et de centrage 18 est inclinée par rapport à l'axe X_{C}, comme illustré sur la figure 2, la zone de centrage 36 de la gaine 10, soit de chacune des pattes de centrage 20 et de chacune des pattes d'appui et de centrage 30 peut présenter, par rapport à l'axe X_{C}, une pente P analogue à la pente d'inclinaison P22 de la face de centrage 22.

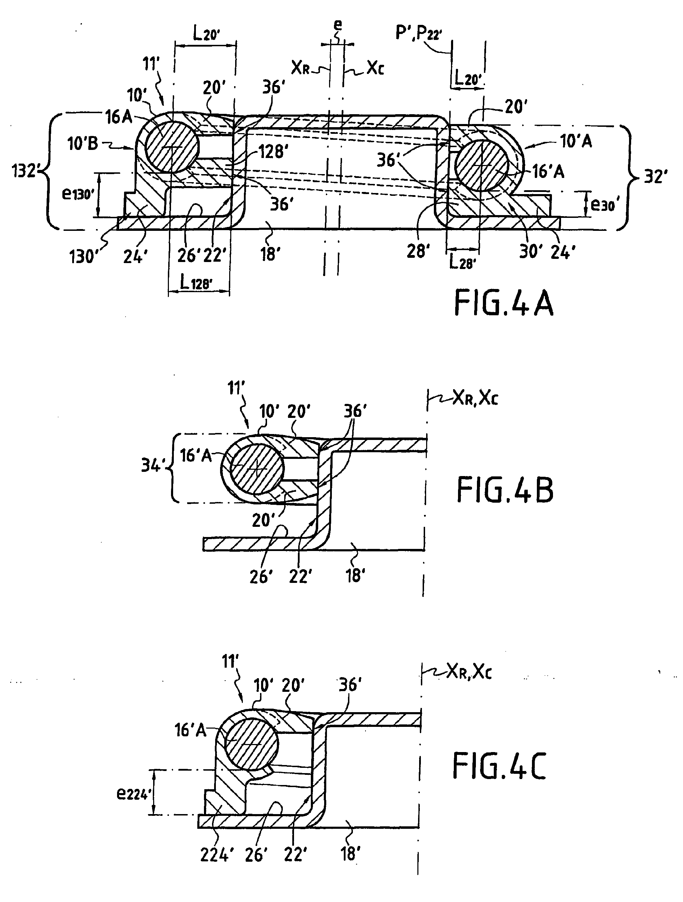

A contrario, comme illustré sur la figure 4A, lorsque la face de centrage 22' d'une coupelle d'appui et de centrage 18' s'étend sensiblement parallèlement à l'axe X du ressort 16, la pente P' de la zone de centrage 36' de chacune des pattes de centrage 20' et de chacune des pattes d'appui et de centrage 30' est nulle, puisque la pente P_{22'} de la face de centrage 22' est nulle. Dans ce cas, la zone de centrage 36' de la gaine 10' est sensiblement parallèle à l'axe X_{C} et la face de centrage 22' à la face d'appui 26' de la coupelle d'appui et de centrage 18 est sensiblement transversale.

En outre, comme illustré sur la figure 2, les pattes de centrage 20, les pattes d'appui 24 et les pattes d'appui et de centrage 30, peuvent être espacées différemment d'une gaine à l'autre selon le type de système de suspension recherché et ce quel que soit le type de coupelle d'appui et de centrage envisagé.

Pour des coupelles d'appui et de centrage habituelles, le nombre N₂₄ de pattes d'appui 24 et le nombre N₂₀ de pattes de centrage 20 sont préférentiellement compris entre 2 et 20, afin que l'espacement curviligne entre deux pattes successives le long de la spire permette un appui et un centrage stables du ressort sur la coupelle d'appui et de centrage.

En conséquence des dispositions des pattes précitées, l'accumulation d'eau et de débris sera évitée ou au moins limitée, car ceux-ci sont facilement éliminés par évacuation dans les interstices I et J existant entre la gaine 10 et la coupelle 18, respectivement du côté de la face de centrage 22 et du côté de la face d'appui 26.

En effet, aux endroits où la pièce de gainage et d'entretoisement 11 ne présente pas de patte (d'appui et/ou de centrage), ni la spire 16'A, ni la gaine 10 ne sont en contact avec la coupelle d'appui et de centrage 18, que ce soit avec la face d'appui 26 ou avec la face de centrage 22 et les interstices I et J permettent l'évacuation de l'eau et des débris. La section transversale 10C de la gaine 10 est préférentiellement en forme de C avec l'ouverture 12 du C tournée vers l'intérieur de la spire d'extrémité 16A, c'est-à-dire vers l'axe X_{R} du ressort 16.

La largeur de l'interstice I, correspondant à la distance entre la gaine et la face de centrage de la coupelle, est avantageusement d'au moins 2 mm et préférentiellement comprise entre 4 et 10 mm. La hauteur de l'interstice J, correspondant à la distance entre la gaine et la face d'appui de la coupelle, est également avantageusement d'au moins 2 mm et peut augmenter le long de la spire en raison de la pente de cette dernière par rapport à la face d'appui.

Selon que l'on souhaite centrer le ressort 16 ou le décentrer par rapport à l'axe X_{C}, la longueur des pattes de centrage et celle des extensions transversales peuvent être constantes d'une patte à l'autre ou au contraire varier pour pouvoir décentrer la spire d'extrémité 16A.

Ainsi, lorsque le ressort 16 est centré de manière axisymétrique par rapport à l'axe X_{C} de la face de centrage 22 de la coupelle d'appui et de centrage 18, c'est-à-dire que l'axe X_{C} est confondu avec l'axe du ressort X_{R} (voir figure 3), la longueur L₂₀ des pattes de centrage 20 et la longueur L₂₈ des extensions transversales 28, est constante d'une patte à l'autre. En outre, lorsque la coupelle d'appui et de centrage 18' présente une face de centrage 22' parallèle à l'axe X_{R} du ressort 16, la longueur L₂₀ des pattes de centrage 20 et la longueur L₂₈ des extensions transversales 28 sont constantes d'une patte à l'autre (L₂₀ est sensiblement égale à L28).

A l'inverse, lorsque le ressort est décentré par rapport à l'axe X_{C} de la coupelle d'appui et de centrage 18, c'est-à-dire que ce dernier est écarté d'une excentricité e par rapport à l'axe du ressort X_{R} (voir figure 4A), la longueur L_{20'} des pattes de centrage 20' et la longueur L_{28'} des extensions transversales 28', est variable d'un type de patte à l'autre, les pattes situées du côté où l'excentricité est positive étant plus courtes que les autres. Ainsi, par exemple, la patte de centrage 20' supérieure située au voisinage de l'extrémité 10'A de la spire 16 est plus courte que la patte de centrage 120' située au voisinage de l'extrémité 10'B (L_{20'} < L_{120'}). Il en va de même avec les extensions transversales 28' et 128' respectivement situées au voisinage de l'extrémité 10'A et 10'B.

Par ailleurs, pour maintenir la spire écartée de la face d'appui 26 tout en compensant la différence de hauteur due à la forme hélicoïdale du ressort 16, les pattes d'appui 24', et plus particulièrement les pattes d'appui et de centrage 30', présentent une épaisseur respective croissante entre deux pattes successives lorsqu'on s'éloigne de la face d'appui 26 suivant la spire d'extrémité 16A.

Ainsi, les pattes inférieures peuvent être de différents types.

Les pattes inférieures de centrage peuvent venir en appui sur la face d'appui 26' de la coupelle d'appui et de centrage 18', pour former une patte d'appui et de centrage 30' ou 130', qui en combinaison avec une patte de centrage supérieure 20', forme une paire de pattes d'appui et de centrage 32' ou 132', comme illustré sur la figure 4A.

Dans ce cas, la patte d'appui et de centrage 30' peut être monobloc (voir côté droit de la figure 4A), par exemple du côté le plus près de la coupelle d'appui et de centrage 18', en particulier au voisinage de l'extrémité 10'A ou être conformée pour éviter des risques de frottement trop important entre la gaine 10' et la coupelle d'appui et de centrage 18' et pour économiser de la matière.

Ainsi, lorsque l'extension devient trop épaisse pour compenser la différence de hauteur de la spire d'extrémité 16'A, on peut prévoir que cette extension 128' se présente uniquement sous une forme analogue à une patte de centrage 20' et que la patte d'appui 124' ne vienne pas directement en contact avec la face de centrage 22', mais uniquement par l'intermédiaire de cette extension 128'; la surface d'appui de la zone d'appui 36' est donc fortement limitée.

En conséquence, la patte d'appui et de centrage 130' proche de l'extrémité la plus éloignée 10'B de la face d'appui 26' de la coupelle d'appui et de centrage 18', est formée par deux branches formant respectivement la patte d'appui 124' et la patte de centrage 128', un espace étant ménagé entre la patte d'appui 124' et la face de centrage 22' et entre la patte de centrage 128' et la face d'appui 26' (voir côté gauche de la figure 4A), alors que cet espace est inexistant pour la patte d'appui et de centrage 30'.

Les pattes inférieures de centrage peuvent aussi n'être en appui que sur la face de centrage 22', comme illustré sur la figure 4B, pour former une paire de pattes de centrage 134'.

De même, la patte inférieure peut être formée uniquement par une patte d'appui 224' dont l'épaisseur e224' est d'autant plus importante que la patte est éloignée de la face d'appui 26' de la coupelle d'appui et de centrage 18'. Une patte de centrage 20' peut être disposée au-dessus de cette patte d'appui 224' inférieure, comme illustré sur la figure 4C.

En fait, on comprendra que toutes les combinaisons sont possibles entre les différentes formes et les différents types de pattes précitées (patte de centrage, patte d'appui, patte d'appui et de centrage, paire de pattes, une au-dessus de l'autre ou non, etc....).

Les même variantes sont envisageables lorsque la coupelle d'appui et de centrage 18 présente une face de centrage 22 inclinée. Par exemple, comme illustré sur la figure 1, les deux pattes d'appui et de centrage 30 monobloc présentent une épaisseur e30 différente d'une patte à l'autre, pour compenser la différence de hauteur de la spire d'extrémité 16A (représentée en traits mixtes) d'une extrémité 10A à l'autre 10B. Ainsi, l'épaisseur e30 de la patte d'appui et de centrage 30 de l'extrémité 10B de la gaine 10 est plus importante que l'épaisseur e30 de la patte d'appui et de centrage 30 de l'extrémité 10A opposée de la gaine 10.

La figure 5 illustre une autre variante d'une gaine 10" qui comporte pour une coupelle inférieure d'appui et de centrage des pattes d'appui et de centrage 30" inférieures non disposées en dessous d'une patte de centrage supérieure. Ces pattes d'appui et de centrage 30", réparties sur la gaine 10", peuvent présenter des variations de forme et d'épaisseur d'une patte d'appui et de centrage à l'autre selon que l'on va en s'éloignant de la spire d'extrémité 16A, en particulier la zone de centrage 36" et l'ouverture 12" peuvent être de différentes conformations d'une gaine 10" à une autre ou sur une même gaine 10", de manière à effectuer différents centrages par rapport à la face de centrage 22 et/ou différents écartements par rapport à la face d'appui 26.

Ce type de gaine 10" ne présentant pas de patte de centrage supérieure disposée au-dessus d'une patte d'appui et de centrage 30" permettant de limiter l'introduction de débris et d'eau au voisinage de cette dernière patte 30", on veillera à ce que la largeur curviligne de ces pattes d'appui et de centrage 30" soit la plus courte. En conséquence, des débris qui viendraient s'accumuler localement seraient facilement évacués de chaque côté de chacune desdites pattes d'appui et de centrage 30" entre la gaine 10" et la coupelle 18.

## Revendications

1. Système de suspension à ressort, comprenant un ressort hélicoïdal (16), une gaine (10 ; 10' ; 10") et au moins une coupelle d'appui et de centrage (18; 18'), ledit ressort (16) comportant une spire d'extrémité (16A) dont au moins une partie (16'A) est recouverte par ladite gaine (10 ; 10'; 10") et qui est centrée et en appui sur ladite coupelle d'appui et de centrage (18 ; 18'), ladite partie de la spire d'extrémité (16'A) recouverte par la gaine (10 ; 10' ; 10") étant centrée et en appui sur la coupelle d'appui et de centrage (18 ; 18') par l'intermédiaire de moyens d'entretoisement (20, 24, 28, 30, 32, 34 ; 20', 24', 124', 28', 128', 30', 130', 32', 132'; 30") entre ladite gaine (10 ; 10'; 10") et ladite coupelle d'appui et de centrage (18 ; 18')
**caractérisé en ce que** ladite gaine (10 ; 10' ; 10") présente une ouverture (12 ; 12' ; 12") s'étendant sur la périphérie interne (14) de la gaine (10 ; 10' ; 10") qui est tournée vers l'axe du ressort (X_{R}),
**en ce que** lesdits moyens d'entretoisement (24, 30, 32 ; 24', 124', 30', 130', 32', 132'; 30") comportent des moyens d'entretoisement axial (24, 30, 32 ; 24', 124', 30', 130', 32', 132'; 30") aptes à maintenir la gaine (10; 10'; 10") à distance d'une face d'appui (26 ; 26') de la coupelle d'appui et de centrage (18 ; 18'),
**en ce que** lesdits moyens d'entretoisement axial (24, 30, 32 ; 24', 124'. 30', 130', 32', 132'; 30") comportent des pattes d'appui (24, 30, 32 24'. 124'. 30'. 130', 32', 132'; 30") s'étendant entre la gaine (10 : 10'; 10") et la face d'appui (26; 26') de la coupelle d'appui et de centrage (18; 18'), et
**en ce qu'**une au moins desdites pattes d'appui (30 : 30', 130') présente une extension transversale (28, 128') apte à coopérez avec une face de centrage (22 ; 22') de la coupelle d'appui et de centrage (18; 18'), formant une patte d'appui et de centrage (30 ; 30', 130').

2. Système de suspension à ressort, selon la revendication précédente, **caractérisé en ce que** lesdits moyens d'entretoisement (20, 28, 30, 32, 34 ; 20', 28', 128', 30', 130', 32', 132' ; 30") comportent des moyens d'entretoisement radial (20, 28, 30, 32, 34 ; 20', 28', 128', 30', 130', 32', 132'; 30") aptes à maintenir la gaine (10 ; 10'; 10") à distance d'une face de centrage (22 ; 22') de la coupelle d'appui et de centrage (18 ; 18').

3. Système de suspension à ressort, selon la revendication précédente, **caractérisé en ce que** lesdits moyens d'entretoisement radial (20, 28, 30, 32, 34 ; 20', 28', 128', 30', 130', 32', 132' ; 30") comportent des pattes de centrage (20, 28, 30, 32, 34 ; 20', 28', 128', 30', 130', 32', 132' ; 30") s'étendant entre la gaine (10 ; 10' ; 10") et la face de centrage (22 ; 22') de la coupelle d'appui et de centrage (18 ; 18').

4. Système de suspension à ressort, selon l'une quelconque des revendications précédentes, **caractérisé en ce qu'**une au moins des pattes de centrage (20, 28, 30, 32, 34 ; 20', 28', 128', 30', 130', 32', 132'; 30") et une au moins des pattes d'appui (24, 30, 32 ; 24', 124', 30', 130', 32', 132'; 30") sont superposées dans une direction axiale du ressort (16) pour former une paire de pattes d'appui et de centrage (32 ; 32', 132') qui s'étend de part et d'autre de l'ouverture (12 ; 12').

5. Système de suspension à ressort, selon l'une quelconque des revendications précédentes, **caractérisé en ce qu'**une au moins des pattes de centrage (20, 28, 30, 34 ; 20', 28', 128', 30'; 30") est disposée au-dessus d'une autre des pattes de centrage (20, 28, 30, 34 ; 20', 28', 128', 30'; 30") dans une direction axiale du ressort (16) pour former une paire de pattes de centrage (34) qui s'étend de part et d'autre de l'ouverture (12 ; 12').

6. Système de suspension à ressort, selon l'une quelconque des revendications précédentes, **caractérisé en ce que** lesdites pattes d'appui (24, 30, 32; 24', 124', 30', 130', 32', 132'; 30") présentent des épaisseurs croissantes en s'éloignant de la face d'appui (26 ; 26') suivant la spire d'extrémité (16A).

7. Système de suspension à ressort, selon l'une quelconque des revendications précédentes, **caractérisé en ce que** les moyens d'entretoisement (20, 24, 28, 30, 32, 34 ; 20', 24', 124', 28', 128', 30', 130', 32', 132'; 30") peuvent être rapportés sur la coupelle d'appui et de centrage (18 ; 18') et/ou sur la gaine (10 ; 10'; 10").

8. Système de suspension à ressort, selon l'une quelconque des revendications précédentes, **caractérisé en ce que** lesdits moyens d'entretoisement (20, 24, 28, 30, 32, 34 ; 20', 24', 124', 28', 128', 30', 130', 32', 132'; 30") et ladite gaine (10 ; 10'; 10") font partie d'une même pièce de gainage et d'entretoisement (11 ; 11' ; 11").

## Claims

1. A spring suspension system comprising a helical spring (16), a sheath (10; 10'; 10"), and at least one centring and bearing cup (18; 18'), said spring (16) having an end turn (16A) with at least a fraction (16'A) thereof being covered by said sheath (10; 10'; 10"), and which is centred on and bears against said centring and bearing cup (18; 18'), said fraction of the end turn (16'A) covered by the sheath (10; 10'; 10") being centred on and bearing against the centring and bearing cup (18; 18') via spacer means (20, 24, 28, 30, 32, 34; 20', 24', 124', 28', 128', 30', 130', 32', 132'; 30") between said sheath (10; 10'; 10") and said centring and bearing cup (18; 18'),
the system being **characterised in that** said sheath (10; 10'; 10") presents an opening (12; 12'; 12") extending around the inner periphery (14) of the sheath (10; 10'; 10") facing towards the spring axis (XR),
**in that** said spacer means (24, 30, 32; 24', 124', 30', 130', 32', 132'; 30") comprise axial spacer means (24, 30, 32; 24', 124', 30', 130', 32', 132'; 30") suitable for holding the sheath (10; 10'; 10") at a distance from a bearing face (26; 26') of the centring and bearing cup (18; 18'),
**in that** said axial spacer means (24, 30, 32; 24', 124', 30', 130', 32', 132'; 30") comprise bearing tabs (24, 30, 32; 24', 124', 30', 130', 32', 132'; 30") extending between the sheath (10; 10'; 10") and the bearing face (26; 26') of the centring and bearing cup (18; 18'), and
**in that** at least one of said bearing tabs (30; 30', 130') presents a transverse extension (28, 128') suitable for co-operating with a centring face (22; 22') of the centring and bearing cup (18; 18'), thereby forming a centring and bearing tab (30; 30', 130') .

2. A spring suspension system according to the preceding claim, **characterised in that** said spacer means (20, 28, 30, 32, 34; 20', 28', 128', 30', 130', 32', 132'; 30'') comprise radial spacer means (20, 28, 30, 32, 34; 20', 28', 128', 30', 130', 32', 132'; 30'') suitable for holding the sheath (10; 10'; 10'') at a distance from the centring face (22; 22') of the centring and bearing cup (18; 18').

3. A spring suspension system according to the preceding claim, **characterised in that** said radial spacer means (20, 28, 30, 32, 34; 20', 28', 128', 30', 130', 32', 132'; 30'') comprise centring tabs (20, 28, 30, 32, 34; 20', 28', 128', 30', 130', 32', 132'; 30") extending between the sheath (10; 10'; 10") and the centring face (22; 22') of the centring and bearing cup (18:18').

4. A spring suspension system according to any one of the preceding claims, **characterised in that** at least one of the centring tabs (20, 28, 30, 32, 34; 20', 28', 128', 30', 130', 32', 132'; 30") and at least one of the bearing tabs (24, 30, 32; 24', 124', 30', 130', 32', 132'; 30") are superposed in an axial direction of the spring (16) to form a centring and bearing pair of tabs (32; 32', 132') extending on either side of the opening (12; 12').

5. A spring suspension system according to any one of the preceding claims, **characterised in that** at least one of the centring tabs (20, 28, 30, 34; 20', 28', 128', 30'; 30") is disposed above another one of the centring tabs (20, 28, 30, 34; 20', 28', 128', 30'; 30") in an axial direction of the spring (16) to form a pair of centring tabs (34) extending on either side of the opening (12; 12').

6. A spring suspension system according to any one of the preceding claims, **characterised in that** said bearing tabs (24, 30, 32; 24', 124', 30', 130', 32', 132'; 30'') present thicknesses that increase going away from the bearing face (26; 26') following the end turn (16A).

7. A spring suspension system according to any one of the preceding claims, **characterised in that** the spacer means (20, 24, 28, 30, 32, 34; 20', 24', 124', 28', 128', 30', 130', 32', 132'; 30") are suitable for fitting to the centring and bearing cup (18; 18') and/or to the sheath (10; 10'; 10").

8. A spring suspension system according to any one of the preceding claims, **characterised in that** said spacer means (20, 24, 28, 30, 32, 34; 20', 24', 124', 28', 128', 30', 130', 32', 132'; 30") and said sheath (10; 10'; 10") form portions of a single spacer and sheath piece (11; 11'; 11").

## Patentansprüche

1. Federaufhängungssystem, umfassend eine spiralförmige Feder (16), eine Hülle (10 ; 10' ; 10") und wenigstens einen Federteller zur Halterung und Zentrierung (18 ; 18'), wobei die Feder (16) eine Endwindung (16A) aufweist, von der wenigstens ein Teil (16'A) durch die Hülle (10 ; 10' ; 10") bedeckt ist und die zentriert und gehalten auf dem Federteller zur Halterung und Zentrierung (18 ; 18') ist, wobei der durch die Hülle (10 ; 10' ; 10") bedeckte Teil der Endwindung (16A') mittels Versteifungsmittein (20, 24, 28, 30, 32, 34; 20', 24', 124', 28', 128', 30', 130', 32', 132'; 30") zwischen der Hülle (10 ; 10' ; 10") und dem Federteller zur Halterung und Zentrierung (18 ; 18') auf dem Federteller zur Halterung und Zentrierung (18, 18') zentriert und gehalten ist,
**dadurch gekennzeichnet, dass** die Hülle (10 ; 10' ; 10") eine Öffnung (12 ; 12' ; 12") aufweist, die sich auf dem inneren Rand (14) der Hülle (10 ; 10' ; 10"), die zur Achse der Feder (X_{R}) hin gedreht ist, erstreckt,
dass die Versteifungsmittel (24, 30, 32 ; 24', 124', 30', 130', 32', 132'; 30") Mittel zur axialen Versteifung (24, 30, 32 ; 24', 124', 30', 130', 32', 132'; 30") aufweisen, die die Hülle (10 ; 10' ; 10") im Abstand zur Halterungsseite (26 ; 26') des Federtellers zur Halterung und Zentrierung (18 ; 18') halten können,
dass die Mittel zur axialen Versteifung (24, 30, 32 ; 24', 124', 30', 130', 32', 132'; 30") Halteklammern (24, 30, 32 ; 24', 124', 30', 130', 32', 132'; 30") aufweisen, die sich zwischen der Hülle (10 ; 10' ; 10") und der Halterungsseite (26, 26') des Federtellers zur Halterung und Zentrierung (18 ; 18') erstrecken, und
dass wenigstens eine der Halterungsklammern (30 ; 30' ; 30") eine transversale Dehnung (28, 128') aufweist, die mit einer Zentrierseite (22; 22') des Federtellers zur Halterung und Zentrierung (18 ; 18') zusammenwirken kann und eine Klammer zur Halterung und Zentrierung (30 ; 30' ; 130') bildet.

2. Federaufhängungssystem nach dem vorhergehenden Anspruch, **dadurch gekennzeichnet, dass** die Versteifungsmittel (20, 28, 30, 32, 34 ; 20', 28', 128', 30', 130', 32', 132' ; 30") Mittel zur radialen Versteifung (20, 28, 30, 32, 34 ; 20', 28', 128', 30', 130', 32', 132' ; 30") aufweisen, die die Hülle (10 ; 10' ; 10") im Abstand zur Zentrierseite (22 ; 22') des Federtellers zur Halterung und Zentrierung (18 ; 18') halten können.

3. Federaufhängungssystem nach dem vorhergehenden Anspruch, **dadurch gekennzeichnet, dass** die Mittel zur radialen Versteifung (20, 28, 30, 32, 34 ; 20', 28', 128', 30', 130', 32', 132' ; 30") Zentrierklammern (20, 28, 30, 32, 34 ; 20', 28', 128', 30', 130', 32', 132' ; 30") aufweisen, die sich zwischen der Hülle (10 ; 10' ; 10") und der Zentrierseite (22 ; 22') des Federtellers zur Halterung und Zentrierung (18 ; 18') erstrecken.

4. Federaufhängungssystem nach einem der vorhergehenden Ansprüche, **dadurch gekennzeichnet, dass** wenigstens eine der Zentrierklammern (20, 28, 30, 32, 34 ; 20', 28', 128', 30', 130', 32', 132'; 30") und wenigstens eine der Halteklammern (24, 30, 32 ; 24', 124', 30', 130', 32', 132'; 30") in einer Axialrichtung der Feder (16) übereinander gelegt sind, um ein Paar von Halte- und Zentrierklammern (32 ; 32' , 132') zu bilden, das sich auf beiden Seiten der Öffnung (12 ; 12') erstreckt.

5. Federaufhängungssystem nach einem der vorhergehenden Ansprüche, **dadurch gekennzeichnet, dass** wenigstens eine der Zentrierklammern (20, 28, 30, 32, 34 ; 20', 28', 128', 30', 130', 32', 132' ; 30") über einer der anderen Zentrierklammern (20, 28, 30, 34 ; 20', 28', 128', 30' ; 30") in einer Axialrichtung (16)) der Feder angeordnet ist, um ein Paar von Zentrierklammern (34) zu bilden, das sich auf beiden Seiten der Öffnung (12 ; 12') erstreckt.

6. Federaufhängungssystem nach einem der vorhergehenden Ansprüche, **dadurch gekennzeichnet, dass** die Halteklammern (24, 30, 32 ; 24', 124', 30', 130', 32', 132'; 30") zunehmende Dicken aufweisen, indem sie sich von der Halterungsseite (26 ; 26') der Endwindung (16A) folgend entfernen.

7. Federaufhängungssystem nach einem der vorhergehenden Ansprüche, **dadurch gekennzeichnet, dass** die Versteifungsmittel (20, 24, 28, 30, 32, 34 ; 20', 24', 124', 28', 128', 30', 130', 32' ; 30") auf dem Federteller zur Halterung und Zentrierung (18 ; 18') und/oder auf der Hülle (10 ; 10' ; 10") angebaut sein können.

8. Federaufhängungssystem nach einem der vorhergehenden Ansprüche, **dadurch gekennzeichnet, dass** die Versteifungsmittel (20, 24, 28, 30, 32, 34 ; 20', 24', 124', 28', 128', 30', 130', 32' ; 30") und die Hülle (10 ; 10' ; 10") Teil ein und desselben Stücks zur Umhüllung und Versteifung (11 ; 11' ; 11") sind.
